# EUROPEAN PATENT APPLICATION

(11) **EP 4 781 966 A1**
(43) Date of publication of application: **29.07.2026**
(21) Application number: 24900811.1
(22) Date of filing: 04.10.2024
(51) Int. Cl.: A61H 3/00, B25J 9/00

(54) **EXERCISE ASSISTANCE DEVICE**

(30) Priority: 08.12.2023 KR 20230177877; 26.01.2024 KR 20240012159; 17.07.2024 KR 20240094570
(71) Applicant: Samsung Electronics Co., Ltd., Suwon-Si, Gyeonggi-do 16677 (KR)
(72) Inventor: PARK, Jaewon, Suwon-si Gyeonggi-do, 16677 (KR); CHOI, Wonjun, Suwon-si Gyeonggi-do, 16677 (KR); PARK, Yunha, Suwon-si Gyeonggi-do, 16677 (KR); KOO, Younggwon, Suwon-si Gyeonggi-do, 16677 (KR); JO, Youngwoo, Suwon-si Gyeonggi-do, 16677 (KR); SONG, Yongjae, Suwon-si Gyeonggi-do, 16677 (KR)
(74) Representative: Gulde & Partner
(86) International application number: PCT/KR2024/015060
(87) International publication number: WO 2025/121623

(57) **Abstract**

A motion assistance apparatus may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on the thigh of the user, a wearing strap connected to the fastening frame and capable of being in close contact with the thigh of the user, and a connection strap extending from the wearing strap and passing between the frame body and the frame holder.

## Description

### BACKGROUND

### 1. Field

Certain example embodiments relate to a motion assistance apparatus.

### 2. Description of Related Art

A change into aging societies has contributed to a growing number of people who experience inconvenience and pain from reduced muscular strength or joint problems due to aging, or a desire to exercise. Thus, there is a growing interest in walking assist devices that enable elderly users or patients with reduced muscular strength or joint problems to walk with less effort, and/or to allow persons to exercise.

### SUMMARY

According to an example embodiment, a motion assistance apparatus may include a base body, comprising a support, configured to support the back of a user, a connection frame connected, directly or indirectly, to the base body, a driving module (comprising a motor and/or circuitry) connected, directly or indirectly, to the connection frame and configured to generate power to assist motion of the user, a waist frame connected to the driving module, a waist belt connected, directly or indirectly, to the waist frame, a leg frame including a frame body configured to receive the power from the driving module and rotate and a frame holder extending from the frame body, and a thigh fastener including a fastening frame disposed on the thigh of the user, a wearing strap connected, directly or indirectly, to the fastening frame and capable of being in close contact with the thigh of the user, and a connection strap extending from the wearing strap and passing between the frame body and the frame holder.

According to an example embodiment, a motion assistance apparatus may include a base body configured to support the back of a user, a connection frame connected, directly or indirectly, to the base body, a driving module (comprising a motor and/or circuitry) connected, directly or indirectly, to the connection frame and configured to generate power to assist motion of the user, a waist frame connected, directly or indirectly, to the driving module, a leg frame including a frame body configured to receive the power from the driving module and rotate and a frame holder extending from the frame body, and a thigh fastener including a fastening frame disposed on the thigh of the user, a wearing strap connected, directly or indirectly, to the fastening frame and capable of being in close contact with the thigh of the user, and a connection strap extending from the wearing strap and passing between the frame body and the frame holder, in which the leg frame is provided to be slidable and tiltable with respect to the thigh fastener.

According to an example embodiment, a motion assistance apparatus may include a base body configured to support the back of a user, a connection frame connected, directly or indirectly, to the base body, a driving module connected, directly or indirectly, to the connection frame and configured to generate power to assist motion of the user, a waist frame connected, directly or indirectly, to the driving module, a waist belt connected, directly or indirectly, to the waist frame, a leg frame including a frame body configured to receive the power from the driving module and rotate and a frame holder of which both end portions are each fixed to the frame body, and a thigh fastener including a fastening frame disposed on the thigh of the user, a wearing strap connected, directly or indirectly, to the fastening frame and capable of being in close contact with the thigh of the user, a connection strap extending from the wearing strap and passing between the frame body and the frame holder, and a stopper configured to set a distance that the frame holder is capable of sliding, in which the leg frame may be provided to be slidable and tiltable with respect to the thigh fastener.

According to an example embodiment, a motion assistance apparatus may include a base body configured to support the back of a user, a connection frame connected, directly or indirectly, to the base body, a driving module connected, directly or indirectly, to the connection frame and configured to generate power to assist motion of the user, a waist frame connected, directly or indirectly, to the driving module, a waist belt connected, directly or indirectly, to the waist frame, a leg frame including a frame body configured to receive the power from the driving module and rotate and a frame holder extending from the frame body, and a thigh fastener including a fastening frame disposed on the thigh of the user, a wearing strap connected, directly or indirectly, to the fastening frame and capable of being in close contact with the thigh of the user, and a connection strap connected, directly or indirectly, to the fastening frame and passing through the frame holder.

According to an example embodiment, a motion assistance apparatus may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on the thigh of the user, a wearing strap connected to the fastening frame and capable of being in close contact with the thigh of the user, a connection strap connected to the fastening frame and passing through the frame holder, and a friction reducing strap of which at least a portion is positioned between the frame holder and the fastening frame.

Other features and aspects will be apparent from the following detailed description, drawings, and claims.

### BRIEF DESCRIPTION OF THE DRAWINGS

The above and other aspects, features, and advantages of certain example embodiments of the present disclosure will be more apparent from the following detailed description, taken in conjunction with the accompanying drawings, in which:
FIG. 1 is a diagram illustrating an overview of a motion assistance apparatus worn on the body of a user, according to an example embodiment;
FIG. 2 is a diagram illustrating an exercise management system including a motion assistance apparatus and an electronic device, according to an example embodiment;
FIG. 3 illustrates a rear schematic view of a motion assistance apparatus according to an example embodiment;
FIG. 4 illustrates a left side view of a motion assistance apparatus according to an example embodiment;
FIG. 5 is a perspective view illustrating a leg frame and a thigh fastener, according to an example embodiment;
FIG. 6 is a perspective view illustrating a thigh fastener according to an example embodiment;
FIG. 7 is a side view illustrating a leg frame and a thigh fastener, according to an example embodiment;
FIG. 8 is a side view illustrating a leg frame and a thigh fastener, according to an example embodiment;
FIG. 9 is a side view illustrating a leg frame and a thigh fastener, according to an example embodiment;
FIG. 10 is a side view illustrating a leg frame and a support band, according to an example embodiment;
FIG. 11 is a perspective view illustrating a sliding plate, a stopper, and a shock-absorbing pad, according to an example embodiment;
FIG. 12 is a perspective view illustrating a leg frame and a thigh fastener, according to an example embodiment;
FIG. 13 is a cross-sectional view illustrating a leg frame and a thigh fastener, according to an example embodiment;
FIG. 14 is a perspective view illustrating a sliding plate, a connection strap, and a friction reduction strap, according to an example embodiment; and
FIG. 15 is an exploded perspective view illustrating a sliding plate, a connection strap, a friction reduction strap, and a plate cover, according to an example embodiment.

### DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, embodiments will be described in detail with reference to the accompanying drawings. When describing the embodiments with reference to the accompanying drawings, like reference numerals refer to like elements and a repeated description related thereto will be omitted.

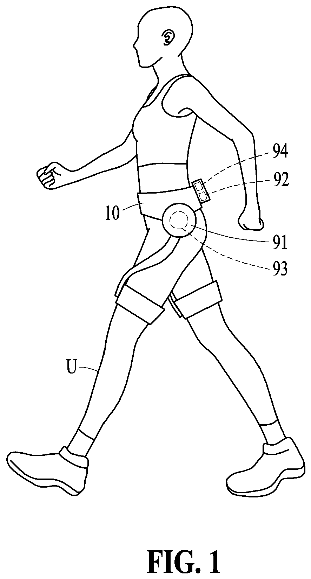

FIG. 1 is a diagram illustrating an overview of a motion assistance apparatus worn on the body of a user, according to an embodiment.

Referring to FIG. 1, in an embodiment, a wearable apparatus 10 may be an apparatus worn on the body of a user U to assist the user U in walking, exercising, and/or working. In an embodiment, the wearable apparatus 10 may be used to measure a physical ability (e.g., a walking ability, an exercise ability, or an exercise posture) of the user U. In embodiments, the term "wearable apparatus" may be replaced with a "wearable robot," a "walking assist apparatus," or a "motion assistance apparatus." The user U may be a human or an animal but is not limited thereto. The wearable apparatus 10 may be worn on the body (e.g., the lower body (the legs, ankles, knees, etc.), the upper body (the torso, arms, wrists, etc.), or the waist) of the user U to apply external force, such as assistance force and/or resistance force, to the body motion of the user U. The assistance force may be force applied in the same direction as the body motion direction of the user U, the force to assist the body motion of the user U. The resistance force may be force applied in a direction that is opposite to the body motion direction of the user U, the force hindering the body motion of the user U. The term "resistance force" may also be referred to as an "exercise load."

In an embodiment, the wearable apparatus 10 may operate in a walking assistance mode to assist the user U in walking. In the walking assistance mode, the wearable apparatus 10 may assist the user U in walking by applying the assistance force generated by a driving module 91 of the wearable apparatus 10 to the body of the user U. The wearable apparatus 10 may allow the user U to walk independently or to walk for a long time by providing force required for walking of the user U, to expand a walking ability of the user U. The wearable apparatus 10 may help in improving an abnormal walking habit or gait posture of a walker.

In an embodiment, the wearable apparatus 10 may operate in an exercise assistance mode to enhance the exercise effect of the user U. In the exercise assistance mode, the wearable apparatus 10 may hinder the body motion of the user U or provide resistance to the body motion of the user U by applying the resistance force generated by the driving module 91 to the body of the user U. When the wearable apparatus 10 is a hip-type wearable apparatus that is worn on the waist (or the pelvis) and the legs (e.g., the thighs) of the user U, the wearable apparatus 10 may provide an exercise load to the leg motion of the user U while being worn on the legs, thereby enhancing the exercise effect on the legs of the user U. In an embodiment, the wearable apparatus 10 may apply the assistance force to the body of the user U to assist the user U in exercising. For example, when a handicapped person or an elderly person wants to exercise wearing the wearable apparatus 10, the wearable apparatus 10 may provide the assistance force to assist the body motion during the exercise process. In an embodiment, the wearable apparatus 10 may provide the assistance force and the resistance force in combination for each exercise section or time section, in such a manner of providing the assistance force in some exercise sections and the resistance force in other exercise sections.

In an embodiment, the wearable apparatus 10 may operate in a physical ability measurement mode to measure a physical ability of the user U. The wearable apparatus 10 may measure motion information of the user U using sensors (e.g., an angle sensor 93 and an inertial measurement unit (IMU) 94) provided in the wearable apparatus 10 while the user U is walking or exercising and may evaluate the physical ability of the user U based on the measured motion information. For example, a gait index or an exercise ability indicator (e.g., muscular strength, endurance, balance, or exercise motion) of the user U may be estimated through the motion information of the user U measured by the wearable apparatus 10. The physical ability measurement mode may include an exercise posture measurement mode to measure an exercise posture of the user U.

In various embodiments, for ease of description, the wearable apparatus 10 is described as an example of a hip-type wearable apparatus, as shown in FIG. 1, but the embodiments are not limited thereto. As described above, the wearable apparatus 10 may be worn on another body part (e.g., the upper arms, lower arms, hands, calves, and feet) other than the waist and legs (particularly, the thighs), and the shape and configuration of the wearable apparatus 10 may vary depending on the body part on which the wearable apparatus 10 is worn.

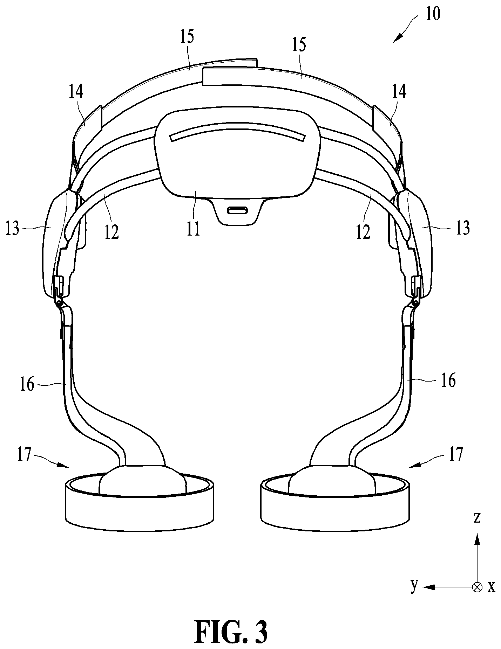

In an embodiment, the wearable apparatus 10 may include a support frame (e.g., a leg frame 16 and connection frames 12 of FIG. 3) configured to assist the body motion of the user U when the wearable apparatus 10 is worn on the body of the user U, a sensor module configured to obtain sensor data including motion information about the body motion (e.g., the leg motion and the upper body motion) of the user U, the driving module 91 (e.g., a driving module 13 of FIG. 3 which may include a motor and/or circuitry) configured to generate torque to be applied to the legs of the user U, and a control module 92 configured to control the wearable apparatus 10.

In an embodiment, the wearable apparatus 10 may include the angle sensor 93 configured to measure the joint angle of the user U and the IMU 94 configured to measure a change in acceleration and rotation velocity according to the body motion of the user U. The angle sensor 93 may measure the rotational angle (or the angular velocity) of a leg frame of the wearable apparatus 10 corresponding to the hip joint angle value of the user U. The rotational angle of a leg support frame measured by the angle sensor 93 may be estimated as the hip joint angle value (or the leg angle value) of the user U. The angle sensor 93 may include, for example, an encoder and/or a Hall sensor. In an embodiment, the angle sensor 93 may be present near each of the right hip joint and the left hip joint of the user U. The IMU 94 may include an acceleration sensor and/or an angular velocity sensor (e.g., a gyro sensor) and may measure a change in acceleration and/or angular velocity (or rotation velocity) according to the motion of the user U. The IMU 94 may measure, for example, an upper body motion value of the user U corresponding to a motion value of a connection frame (or a base body (a base body 11 of FIG. 3, comprising a support)) of the wearable apparatus 10. The motion value of the connection frame, measured by the IMU 94, may be estimated as the upper body motion value of the user U. Herein, the "IMU" may also be referred to as an "inertial sensor."

In an embodiment, the control module 92 and the IMU 94 may be disposed in the base body (e.g., the base body 11 of FIG. 3) of the wearable apparatus 10. The base body may be positioned on the lumbar region (an area of the lower back) of the user U while the user U is wearing the wearable apparatus 10. The base body may be formed or attached to the outside of the connection frame of the wearable apparatus 10. The base body may be mounted on the lumbar region of the user U to provide a cushioning feeling to the lower back of the user U and may support the lower back of the user U together with the connection frame.

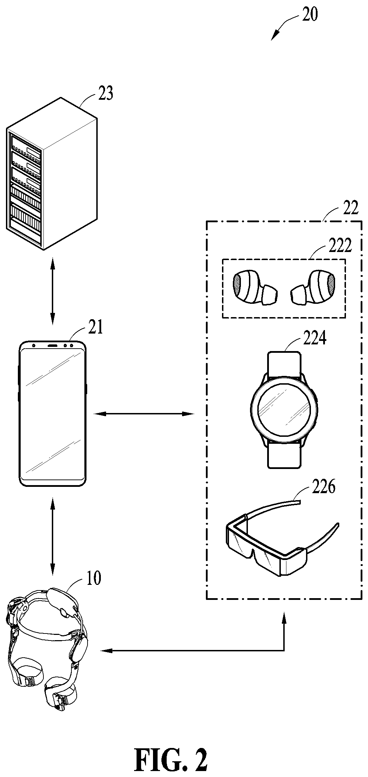

FIG. 2 is a diagram illustrating an exercise management system including a motion assistance apparatus and an electronic device, according to an embodiment.

Referring to FIG. 2, an exercise management system 20 may include the wearable apparatus 10 to be worn on the body of a user, an electronic device 21, another wearable apparatus 22, and a server 23. In an embodiment, at least one (e.g., the other wearable apparatus 22 or the server 23) of these devices and apparatuses may be omitted from the exercise management system 20, or one or more other apparatuses (e.g., an exclusive controller apparatus of the wearable apparatus 10, comprising processing circuitry) may be added to the exercise management system 20.

In an embodiment, the wearable apparatus 10 may be worn on the body of the user in the walking assistance mode to assist the motion of the user. For example, the wearable apparatus 10 may be worn on the legs of the user to help the user in walking by generating the assistance force to assist the leg motion of the user.

In an embodiment, the wearable apparatus 10 may generate the resistance force for hindering the body motion of the user or the assistance force for assisting the body motion of the user and apply the generated resistance force or assistance force to the body of the user to enhance the exercise effect of the user in the exercise assistance mode. In the exercise assistance mode, the user may select, through the electronic device 21, an exercise program (e.g., squat, split lunge, dumbbell squat, lunge and knee up, stretching, or the like) to perform using the wearable apparatus 10 and/or exercise intensity to be applied to the wearable apparatus 10. The wearable apparatus 10 may control a driving module of the wearable apparatus 10 according to the exercise program selected by the user and obtain sensor data including motion information of the user through a sensor module. The wearable apparatus 10 may adjust the strength of the resistance force or the assistance force applied to the user according to the exercise intensity selected by the user. For example, the wearable apparatus 10 may control the driving module to generate the resistance force corresponding to the exercise intensity selected by the user.

In an embodiment, the wearable apparatus 10 may be used to measure a physical ability of the user by interworking with the electronic device 21. The wearable apparatus 10 may operate in the physical ability measurement mode, which is a mode to measure the physical ability of the user, under the control by the electronic device 21, and may transmit sensor data obtained by the motion of the user in the physical ability measurement mode to the electronic device 21. The electronic device 21 may estimate the physical ability of the user by analyzing the sensor data received from the wearable apparatus 10.

In an embodiment, the electronic device 21 may communicate with the wearable apparatus 10 and may remotely control the wearable apparatus 10 or provide the user with state information about a state (e.g., a booting state, a charging state, a sensing state, or an error state) of the wearable apparatus 10. The electronic device 21 may receive sensor data obtained by a sensor in the wearable apparatus 10 from the wearable apparatus 10 and estimate the physical ability of the user or the exercise result based on the received sensor data. In an embodiment, when the user exercises wearing the wearable apparatus 10, the wearable apparatus 10 may obtain sensor data including motion information of the user using sensors and transmit the obtained sensor data to the electronic device 21. The electronic device 21 may extract a motion value of the user from the sensor data and evaluate an exercise posture of the user based on the extracted motion value. The electronic device 21 may provide the user with an exercise posture measured value and exercise posture evaluation information related to the exercise posture of the user through a graphical user interface (GUI).

In an embodiment, the user may execute a program (e.g., an application) in the electronic device 21 to control the wearable apparatus 10 and may adjust an operation or a setting value (e.g., a torque magnitude output from the driving module 13 of FIG. 3, a volume of audio output from a sound output module, and a lighting unit) of the wearable apparatus 10 through the program. The program executed by the electronic device 21 may provide a GUI for interaction with the user. The electronic device 21 may be a device in various forms. For example, the electronic device 21 may include a portable communication device (e.g., a smartphone), a computer device, an access point, a portable multimedia device, or a home appliance (e.g., a television, an audio device, or a projector device) but is not limited thereto.

In an embodiment, the electronic device 21 may be connected to the server 23 using short-range wireless communication or cellular communication. The server 23 may receive user profile information of the user who uses the wearable apparatus 10 from the electronic device 21 and store and manage the received user profile information. The user profile information may include, for example, information about at least one of the name, age, gender, height, weight, or body mass index (BMI). The server 23 may receive exercise history information about an exercise performed by the user from the electronic device 21 and store and manage the received exercise history information. The server 23 may provide the electronic device 21 with various exercise programs or physical ability measurement programs that may be provided to the user.

In an embodiment, the wearable apparatus 10 and/or the electronic device 21 may be connected, directly or indirectly, to the other wearable apparatus 22. The other wearable apparatus 22 may be, for example, wireless earphones 222, a smart watch 224, or smart glasses 226 but is not limited thereto. In an embodiment, the smart watch 224 may measure a biosignal including heart rate information of the user and transmit the measured biosignal to the electronic device 21 and/or the wearable apparatus 10. The electronic device 21 may estimate the heart rate information (e.g., the current heart rate, maximum heart rate, and average heart rate) of the user based on the biosignal received from the smart watch 224 and provide the estimated heart rate information to the user.

In an embodiment, the exercise result information, physical ability information (e.g., walking evaluation information), and/or exercise posture evaluation information of the user evaluated by the electronic device 21 may be transmitted to the other wearable apparatus 22 and provided to the user through the other wearable apparatus 22. State information of the wearable apparatus 10 may also be transmitted to the other wearable apparatus 22 and provided to the user through the other wearable apparatus 22. In an embodiment, the wearable apparatus 10, the electronic device 21, and the other wearable apparatus 22 may be connected to each other through wireless communication (e.g., Bluetooth communication or wireless-fidelity (Wi-Fi) communication).

In an embodiment, the wearable apparatus 10 may provide (or output) feedback (e.g., visual feedback, auditory feedback, or haptic feedback) corresponding to the state of the wearable apparatus 10 according to a control signal received from the electronic device 21. For example, the wearable apparatus 10 may provide visual feedback through the lighting unit and provide auditory feedback through the sound output module. The wearable apparatus 10 may include a haptic module and provide haptic feedback in the form of vibration to the body of the user through the haptic module. The electronic device 21 may also provide (or output) feedback (e.g., visual feedback, auditory feedback, or haptic feedback) corresponding to the state of the wearable apparatus 10.

In an embodiment, the electronic device 21 may present a personalized exercise goal to the user in the exercise assistance mode. The personalized exercise goal may include respective target amounts of exercise for exercise types (e.g., strength exercise, balance exercise, and aerobic exercise) desired by the user, determined by the electronic device 21 and/or the server 23. When the server 23 determines a target amount of exercise, the server 23 may transmit information about the determined target amount of exercise to the electronic device 21. The electronic device 21 may personalize and present the target amounts of exercise for the exercise types, such as strength exercise, aerobic exercise, and balance exercise, according to a desired exercise program (e.g., squat, split lunge, or a lunge and knee up) and/or the physical characteristics (e.g., the age, height, weight, and BMI) of the user. The electronic device 21 may display a GUI screen displaying the target amounts of exercise for the respective exercise types on a display.

In an embodiment, the electronic device 21 and/or the server 23 may include a database in which information about a plurality of exercise programs to be provided to the user through the wearable apparatus 10 is stored. To achieve the exercise goal of the user, the electronic device 21 and/or the server 23 may recommend an exercise program that is suitable for the user. The exercise goal may include, for example, at least one of muscle strength improvement, physical strength improvement, cardiovascular endurance improvement, core stability improvement, flexibility improvement, or symmetry improvement. The electronic device 21 and/or the server 23 may store and manage the exercise program performed by the user, the results of performing the exercise program, and the like.

In an embodiment, the electronic device 21 may evaluate a walking ability of the user in interoperation with the wearable apparatus 10. For example, the electronic device 21 may estimate a gait index, which is an indicator of a walking state of the user, based on sensor data obtained from a sensor module of the wearable apparatus 10 worn by the user. The gait index may be a criterion for determining the quality of walking performed by the user. The gait index estimated by the electronic device 21 may include, for example, at least one of a walking speed, a step time, a step length, a stride length, a walking distance, a gait symmetry index, a gait variability index, or a walk ratio. The electronic device 21 may calculate the gait index in real time while the user walks wearing the wearable apparatus 10.

In an embodiment, when the user walks (or exercises) wearing the wearable apparatus 10, the wearable apparatus 10 may obtain sensor data including motion information related to walking of the user using sensors and transmit the obtained sensor data to the electronic device 21. The electronic device 21 may estimate walking evaluation information of the user based on the sensor data and provide the user with the estimated walking evaluation information. The walking evaluation information may include, for example, various gait indices (e.g., the walking speed, the step time, the step or stride length, the gait symmetry index, the gait variability index, and the walk ratio) related to walking of the user when the user walks wearing the wearable apparatus 10. The electronic device 21 may provide the user with feedback information to improve the walking state of the user based on the walking evaluation information. For example, when it is determined the measured step or stride length of the user is less than a desirable step or stride length, the electronic device 21 may propose that the user walk with a wider step or stride length.

In an embodiment, the wearable apparatus 10 and the electronic device 21 may estimate the gait index such as the walking speed using an angle sensor (e.g., the angle sensor 93) and an IMU (e.g., the IMU 94) of the wearable apparatus 10, without using a global positioning system (GPS) sensor for tracking the position of the user, and may thus estimate the gait index not only outdoors but also indoors. In addition, the wearable apparatus 10 and the electronic device 21 may estimate the gait index even when the user walks at a fixed position, such as on a treadmill, and may estimate the gait index reflecting the individual characteristics of the user. The electronic device 21 may provide the user using the wearable apparatus 10 with evaluation information about the walking state of the user, thereby increasing the user's interest in walking or exercising.

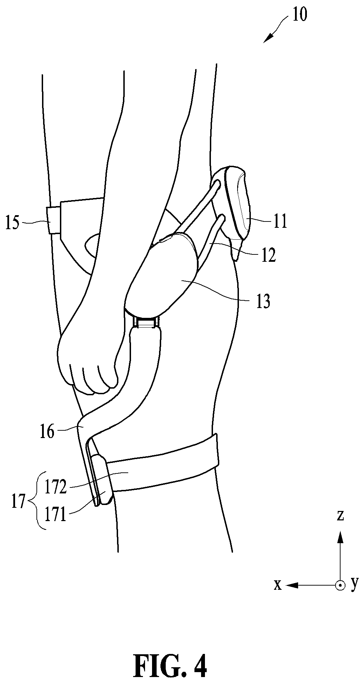

FIG. 3 illustrates a rear schematic view of a motion assistance apparatus according to an embodiment, and FIG. 4 illustrates a left side view of the motion assistance apparatus according to an embodiment.

Referring to FIGS. 3 and 4, the wearable apparatus 10 according to an embodiment may include the base body 11 comprising a support, the connection frames 12, the driving module 13, a waist frame 14, a waist belt 15, the leg frame 16, and a thigh fastener 17. In an embodiment, at least one of the components described above may be omitted from the wearable apparatus 10, or one or more other components (e.g., a haptic module) may be added to the wearable apparatus 10. Each "driving module" herein may comprise a motor and/or circuitry.

In an embodiment, the base body 11 may be positioned on the lumbar region of a user while the user is wearing the wearable apparatus 10. The base body 11 may be mounted on the lumbar region of the user to provide a cushioning feeling to the lower back of the user and may support the lower back of the user. The base body 11 may be hung on the hip region (an area of the hips) of the user to prevent or reduce chances of the wearable apparatus 10 from being separated downward due to gravity while the user is wearing the wearable apparatus 10. The base body 11 may distribute a portion of the weight of the wearable apparatus 10 to the lower back of the user while the user is wearing the wearable apparatus 10. The base body 11 may be connected, directly or indirectly, to the connection frames 12. Connection frame-connecting elements (not shown) that may be connected, directly or indirectly, to the connection frames 12 may be provided at both end portions of the base body 11.

In an embodiment, the connection frames 12 may extend from both end portions of the base body 11. The lumbar region of the user may be accommodated inside of the connection frames 12. The connection frames 12 may include at least one rigid body beam. The connection frames 12 may extend from one end portion and the other end portion of the base body 11, respectively. Each beam may have a curved shape with a preset curvature to surround the lumbar region of the user. The driving module(s) 13 may be connected, directly or indirectly, to the connection frames 12.

In an embodiment, a control module, an IMU (not shown) (e.g., the IMU 94 of FIG. 1), a communication module (not shown), and a battery (not shown) may be disposed inside of the base body 11. The base body 11 may protect the control module, the IMU, the communication module, and the battery. The control module may generate a control signal that controls the operation of the wearable apparatus 10. The control module may include a control circuit including a processor and a memory to control an actuator of the driving module 13. The control module may further include a power supply module (not shown) to supply power from the battery to each component of the wearable apparatus 10. Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment, the wearable apparatus 10 may include a sensor module (not shown) that obtains sensor data from one or more sensors. The sensor module may obtain sensor data that changes depending on the motion of the user. In an embodiment, the sensor module may obtain sensor data including motion information of the user and/or motion information of the components of the wearable apparatus 10. The sensor module may include, for example, but is not limited thereto, an IMU (e.g., the IMU 94 of FIG. 1) to measure an upper body motion value of the user or a motion value of the connection frames 12 and an angle sensor (e.g., the angle sensor 93 of FIG. 1) to measure a hip joint angle value of the user or a motion value of the leg frame 16. For example, the sensor module may further include at least one of a position sensor, a temperature sensor, a biosignal sensor, or a proximity sensor.

In an embodiment, the waist frame 14 may be connected, directly or indirectly, to the driving module 13. The waist frame 14 may surround at least a portion of the waist of the user. The waist frame 14 may include a more rigid material than the waist belt 15. The waist frame 14 may support the waist belt 15.

In an embodiment, the waist belt 15 may be positioned on the front of the waist of the user. For example, the waist belt 15 may include a Velcro structure. One of the two waist belts 15 may have a hook surface and the other one may have a loop surface.

In an embodiment, the driving module 13 may generate external force (or torque) applied to the body of the user based on the control signal generated by the control module. For example, the driving module 13 may generate assistance force or resistance force applied to the legs of the user. In an embodiment, the driving module 13 may be positioned at a position corresponding to the hip joint position of the user. The driving module 13 may include an actuator (e.g., motor) and a joint member. The actuator may provide power to the joint member. The actuator may include a motor that generates power (or torque) by receiving power from the battery. When the motor is driven by receiving power, the motor may generate force (assistance force) to assist the body motion of the user or force (resistance force) to hinder the body motion of the user. In an embodiment, the control module may adjust the intensity and direction of the force generated by the motor by adjusting the voltage and/or current supplied to the motor.

In an embodiment, the joint member may receive power from the actuator and apply external force to the body of the user based on the received power. The joint member may be disposed at a position corresponding to the joint portion of the user. One side of the joint member may be connected, directly or indirectly, to the actuator, and the other side of the joint member may be connected, directly or indirectly, to the leg frame 16. The joint member may be rotated by power received from the actuator. An encoder or a Hall sensor that may operate as the angle sensor to measure the rotational angle (corresponding to the joint angle of the user) of the joint member may be disposed on one side of the joint member.

In an embodiment, the actuator may be disposed in a lateral direction of the joint member. The rotation axis of the actuator and the rotation axis of the joint member may be disposed to be spaced apart from each other. However, embodiments are not limited thereto, and the actuator and the joint member may share the rotation axis. In an embodiment, the actuator may be disposed to be spaced apart from the joint member. In this case, the driving module 13 may further include a power transmission module (not shown) that transmits power from the actuator to the joint member. The power transmission module may be a rotating body, such as a gear, or a longitudinal member, such as a wire, cable, string, spring, belt, or chain. However, the scope of the embodiment is not limited by the positional relationship and power transmission structure between the actuator and the joint member described above.

In an embodiment, the leg frame 16 may be positioned along the legs (e.g., the thighs) of the user when the wearable apparatus 10 is worn on the legs of the user. The leg frame 16 may, for example, transmit power (torque) generated by the driving module 13 to the thighs of the user. The power generated by the driving module 13 may act as external force applied to the leg motion of the user. One end portion of the leg frame 16 may be connected, directly or indirectly, to the joint member and be rotated, and as the other end portion of the leg frame 16 is connected, directly or indirectly, to the thigh fastener 17, the leg frame 16 may transmit the power generated from the driving module 13 to the thighs of the user. For example, the leg frame 16 may push or pull the thighs of the user. The leg frame 16 may extend along the longitudinal direction of the thighs of the user. The leg frame 16 may be bent to surround at least a portion of the circumference of the thighs of the user. The upper portion of the leg frame 16 may cover a side surface of the thighs of the user, and the lower portion of the leg frame 16 may cover the front surface of the thighs of the user. The central portion of the leg frame 16 may have a twisted shape.

In an embodiment, the thigh fastener 17 may be connected, directly or indirectly, to the leg frame 16 and may fix the leg frame 16 to the thigh of the user. In an embodiment, the thigh fastener 17 may include a fastening frame 171 and a wearing strap 172.

In an embodiment, the fastening frame 171 may apply torque generated from the driving module 13 to the thigh of the user. The fastening frame 171 may be disposed on one side of the thigh of the user and push or pull the thighs of the user. The fastening frame 171 may be disposed on the front surface of the thigh of the user, for example. The fastening frame 171 may be disposed along the circumferential direction of the thigh of the user. The fastening frame 171 may extend to both sides based on the other end portion of the leg frame 16 and may include a curved surface corresponding to the thigh of the user.

In an embodiment, the wearing strap 172 may be connected, directly or indirectly, to the fastening frame 171 and may be in close contact with the thigh of the user. The wearing strap 172 may surround the remaining portions that are not surrounded by the fastening frame 171. The wearing strap 172 may include, for example, an elastic material.

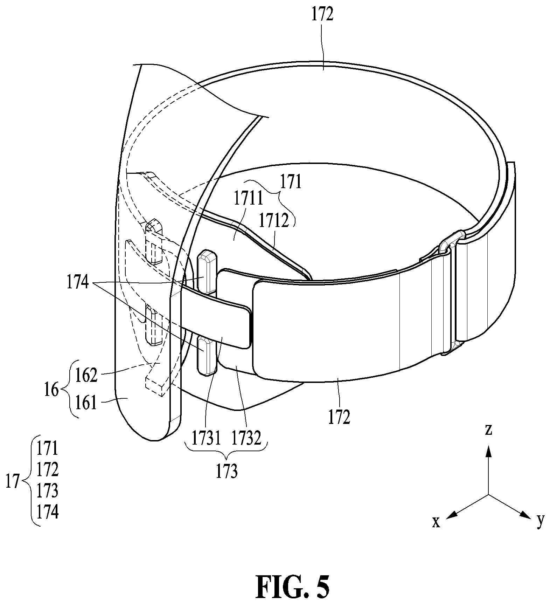

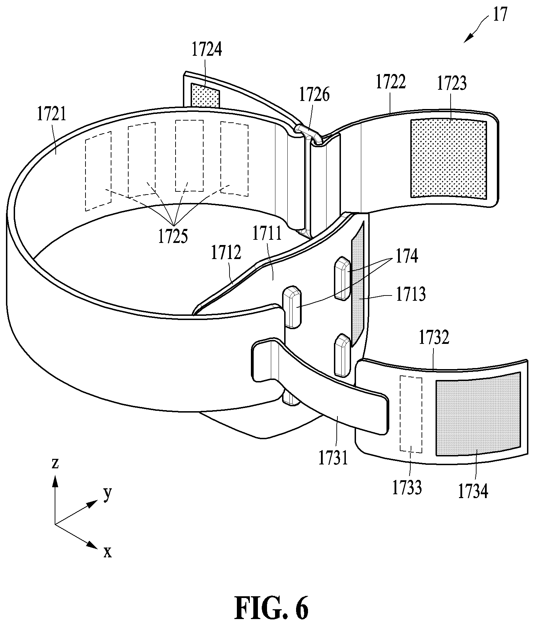

FIG. 5 is a perspective view illustrating a leg frame and a thigh fastener, according to an embodiment, and FIG. 6 is a perspective view illustrating the thigh fastener according to an embodiment.

Referring to FIGS. 5 and 6, the leg frame 16 according to an embodiment may be detachably connected to the thigh fastener 17 through a ring structure. The leg frame 16 may include a frame body 161 and a frame holder 162.

In an embodiment, the frame body 161 may be rotated by receiving power from a driving module (e.g., the driving module 13 of FIG. 4). The frame body 161 may extend toward the fastening frame 171 while surrounding the outer side surface of the thigh of the user. An end portion of the frame body 161 may face the thigh fastener 17.

In an embodiment, the frame holder 162 may extend from the frame body 161 toward the thigh fastener 17. The frame holder 162 may have a shape that protrudes convexly toward the thigh fastener 17. The frame holder 162 may be formed of the same material as the frame body 161, for example. Both end portions of the frame holder 162 may be fixed to the frame body 161. One end portion and the other end portion of the frame holder 162 may be disposed along the vertical direction. Here, the vertical direction may be parallel to the z-axis with respect to FIG. 5. From this structure, the frame body 161 and the frame holder 162 may form a ring structure having both end portions of the frame holder 162 as a boundary. A connection strap 173 may pass through a space between the frame body 161 and the frame holder 162. To prevent or reduce chances of the frame holder 162 from separating from the connection strap 173, both end portions of the connection strap 173 may be directly or indirectly connected to the fastening frame 171. In an embodiment, the fastening frame 171 may include a sliding plate 1711 and a shock-absorbing pad 1712.

In an embodiment, the sliding plate 1711 may face the frame body 161. The frame holder 162 may slip on the sliding plate 1711. Furthermore, as described below, based on the y-axis direction, a distance that the frame holder 162 may slide may be limited by a stopper 174.

In an embodiment, the shock-absorbing pad 1712 may be attached to the inner side surface of the sliding plate 1711. The shock-absorbing pad 1712 may be in close contact with the thigh of the user. The shock-absorbing pad 1712 may include a soft material. When the sliding plate 1711 is pressed toward the thigh of the user due to external force, the shock-absorbing pad 1712 may be compressed and absorb a portion of the external force. The wearability of a motion assistance apparatus may be improved. In an embodiment, the shock-absorbing pad 1712 may be provided to be replaceable. The shock-absorbing pad 1712 that is suitable for the shape of the thigh of the user and type of exercise may be used.

In an embodiment, the connection strap 173 may extend from the wearing strap 172 and support the frame holder 162. One end portion of the connection strap 173 may be fixed to one end portion of the wearing strap 172. The other end portion of the connection strap 173 may be detachably connected to a frame-detachable surface 1713 disposed on the sliding plate 1711. While the connection strap 173 is connected, directly or indirectly, to a detachable surface, the other end portion of the wearing strap 172 may be connected, directly or indirectly, to the other end portion of the connection strap 173. From this structure, the leg frame 16 and the thigh fastener 17 may be easily connected and separated to and from each other. For example, when connecting the leg frame 16 to the thigh fastener 17, the other end portion of the connection strap 173 may be separated from the fastening frame 171 and the wearing strap 172 and then may pass through the space between the frame body 161 and the frame holder 162. Subsequently, the other end portion of the wearing strap 172 may be reattached to the fastening frame 171 and the connection strap 173, and the leg frame 16 may remain connected without being separated from the thigh fastener 17. The connection strap 173 may include a support band 1731 and a fixing band 1732.

In an embodiment, the support band 1731 may be connected, directly or indirectly, to one end portion of the wearing strap 172 and may support the frame holder 162. The support band 1731 may support the frame holder 162 in a direction toward the sliding plate 1711. In an embodiment, the frame holder 162 may be made of a more rigid material than the support band 1731. The support band 1731 may be made of a relatively softer material than the frame holder 162 and thus may support the frame holder 162 moving in various directions. Flexible motion of the leg frame 16 relative to the thigh fastener 17 may be possible. Squeak caused by friction between the frame holder 162 and the support band 1731 may be reduced.

In an embodiment, the fixing band 1732 may extend from the support band 1731 and may be detachably connected, directly or indirectly, to the frame-detachable surface 1713. The other end portion of the wearing strap 172 may be connected, directly or indirectly, to the fastening frame 171 through the fixing band 1732. A first strap-detachable surface 1733 may be disposed on one surface of the fixing band 1732, and a second strap-detachable surface 1734 may be disposed on the other surface of the fixing band 1732. In an embodiment, based on a direction that is parallel to the x-axis, at least a portion of the first strap-detachable surface 1733 may overlap at least a portion of the second strap-detachable surface 1734. The first strap-detachable surface 1733 may be connected to the frame-detachable surface 1713. For example, the first strap-detachable surface 1733 and the frame-detachable surface 1713 may include a hook-and-loop fastener structure. The other end portion of the wearing strap 172 may be connected to the second strap-detachable surface 1734. From this structure, both surfaces of the fixing band 1732 may be supported by the fastening frame 171 and the wearing strap 172, respectively. When the frame holder 162 pulls the support band 1731 so that external force is applied to the fixing band 1732, the fixing band 1732 may not be easily separated from a position in which the fixing band 1732 is attached to the fastening frame 171.

In an embodiment, the other end portion of the wearing strap 172 may be detachably connected to the second strap-detachable surface 1734. As the wearing strap 172 is detachably attached to the second strap-detachable surface 1734, the thigh fastener 17 may be easily worn on the thigh of the user. For example, when the user tries to wear the thigh fastener 17 on the thigh of the user, the other end portion of the wearing strap 172 may surround the thigh of the user after being separated from the second strap-detachable surface 1734 and may be reconnected to the second strap-detachable surface 1734.

In an embodiment, the wearing strap 172 may be provided to be adjustable in length. For example, the wearing strap 172 may include a plurality of bands and a connecting member (e.g., a ring, fixing pin, buckle, dial, etc.) that connects two adjacent bands. In an embodiment, the wearing strap 172 may include a main band 1721, an auxiliary band 1722, and a band connection ring 1726.

In an embodiment, the length of the main band 1721 may be greater than the length of the auxiliary band 1722. One end portion of the main band 1721 and one end portion of the auxiliary band 1722 may be disposed opposite to each other with respect to the frame holder 162. For example, one end portion of the main band 1721 may be fixed to the surface of the fastening frame 171. A first band-detachable surface 1723 disposed on one end portion of the auxiliary band 1722 may be attached to a second strap-detachable surface 1734. For example, the first band-detachable surface 1723 and the second strap-detachable surface 1734 may include a hook-and-loop fastener structure.

In an embodiment, the other end portion of the main band 1721 and the other end portion of the auxiliary band 1722 may be connected to each other through the band connection ring 1726. For example, the band connection ring 1726 may include two holes formed side by side with each other. The other end portion of the auxiliary band 1722 may pass through one of the holes of the band connection ring 1726 and then be bent in the opposite direction to form a ring. The band connection ring 1726 may be connected to the ring formed on the auxiliary band 1722 and may not be separated from the auxiliary band 1722. The other end portion of the main band 1721 may pass through the other hole of the holes of the band connection ring 1726 and then be bent in the opposite direction to form a ring. Here, a second band-detachable surface 1724 and a third-detachable surface disposed on the outer side surface of the main band 1721 may be detachably connected to each other. For example, the second band-detachable surface 1724 and the third-detachable surface may include a hook-and-loop fastener structure. In an embodiment, a third band-detachable surface 1725 may be provided in plurality to be spaced apart from each other along the longitudinal direction of the main band 1721. The wearing strap 172 may be in close contact with the thigh of the user corresponding to the thigh circumference of various users. In the drawings herein, the number of third band-detachable surfaces 1725 is shown as four, but the number is not necessarily limited thereto.

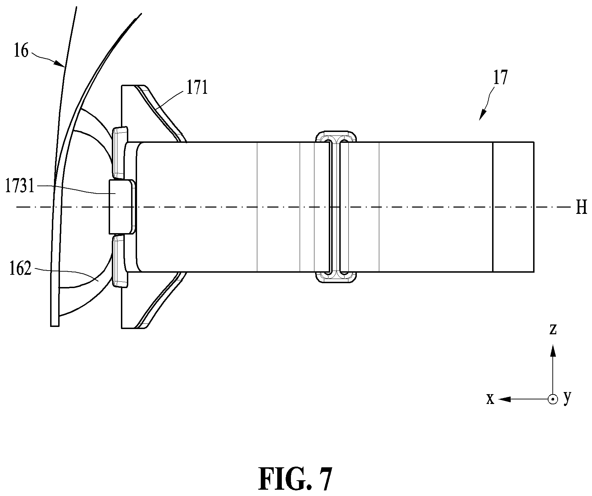

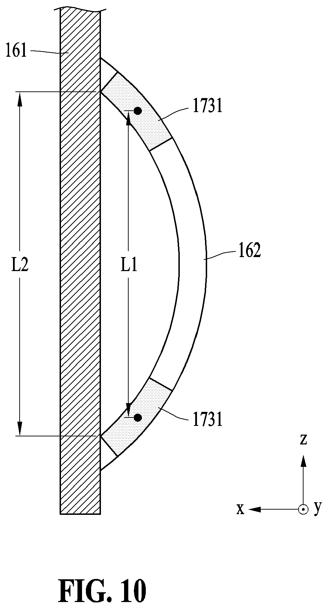

FIGS. 7 to 9 are side views illustrating a leg frame and a thigh fastener, according to an embodiment, and FIG. 10 is a side view illustrating a leg frame and a support band, according to an embodiment.

Referring to FIGS. 7 to 10, the leg frame 16 according to an embodiment may be capable of sliding and tilting with respect to the thigh fastener 17. Here, tilting may refer to rotating (pitch-rotating) with respect to the y-axis as a rotation axis, based on FIG. 5. In an embodiment, as the frame holder 162 moves in a space between the support band 1731 and a fastening frame 171, the leg frame 16 may move with respect to the thigh fastener 17.

In an embodiment, the frame holder 162 may be provided to be slidable in at least two directions with respect to the fastening frame. For example, the frame holder 162 may be provided to be slidable in a first direction that is parallel to the longitudinal direction of the connection strap 173 and a second direction intersecting the first direction. Here, the first direction and the second direction may be directions that are parallel to the y-axis and the z-axis, respectively, based on FIG. 5.

In an embodiment, both end portions of the frame holder 162 may be connected to the frame body 161, so a distance that the support band 1731 may slip along the frame holder 162 may be limited to between both end portions of the frame holder 162. Considering the thickness of the support band 1731, a distance L1 that the frame holder 162 may slide in the second direction may be less than a distance L2 between both end portions of the frame holder 162.

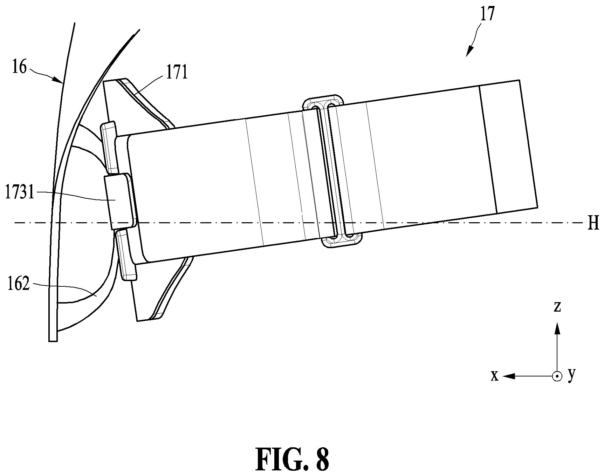

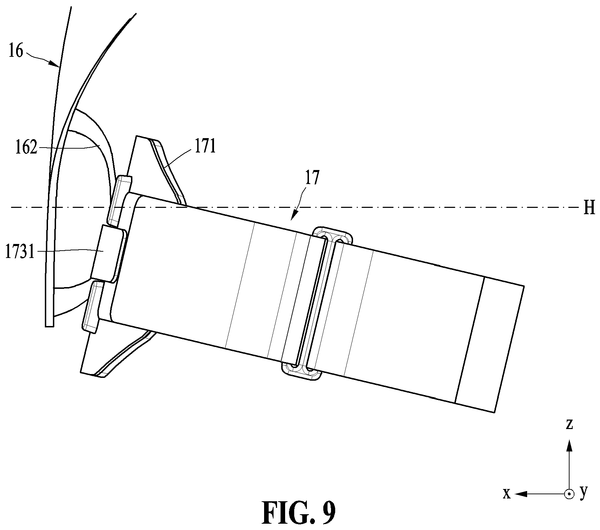

In an embodiment, the leg frame 16 may simultaneously slide and tilt with respect to the thigh fastener 17. For ease of description, the description is based on a case in which the thigh fastener 17 moves with respect to the leg frame 16. For example, as shown in FIG. 7, the thigh fastener 17 may be in a horizontal state with a virtual reference line H from the leg frame 16 toward the front surface of the thigh fastener 17. In this state, when the thigh fastener 17 is pulled upwardly, the support band 1731 slides upwardly along the curved surface of the frame holder 162, so the thigh fastener 17 may slide and tilt upwardly with respect to the virtual reference line H, as shown in FIG. 8. In contrast, in the state shown in FIG. 7, when the thigh fastener 17 is pulled downwardly, the support band 1731 slides downwardly along the curved surface of the frame holder 162, so the thigh fastener 17 may slide and tilt downwardly with respect to the virtual reference line H, as shown in FIG. 9.

In an embodiment, the leg frame 16 may roll-rotate with respect to the thigh fastener 17. Here, roll-rotating may refer to rotating with respect to the x-axis as a rotation axis, based on FIG. 5. The range that the leg frame 16 may slide in the first direction and roll-rotate may be limited by a stopper (e.g., the stopper 174 of FIG. 5). Hereinafter, the stopper is described in detail.

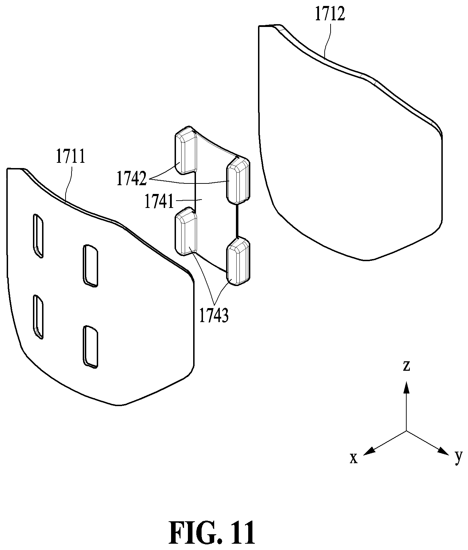

FIG. 11 is a perspective view illustrating a sliding plate, a stopper, and a shock-absorbing pad, according to an embodiment. Furthermore, it should be noted in advance that a frame-detachable surface disposed on, directly or indirectly, a surface of a sliding plate is omitted.

Referring to FIG. 11, a thigh fastener (e.g., the thigh fastener 17 of FIG. 5) according to an embodiment may further include the stopper 174. At least a portion of the stopper 174 may protrude from a fastening frame (e.g., the fastening frame 171 of FIG. 5) toward a frame body (e.g., the frame body 161 of FIG. 5). The stopper 174 may reduce the range that a frame holder may roll-rotate and slide in a first direction with respect to the thigh fastener. The stopper 174 may reduce the loss of power transmitted from a leg frame (e.g., the leg frame 16 of FIG. 5) to the thigh fastener. The stopper 174 may include a support body 1741, a pair of first body protrusions 1742, and a pair of second body protrusions 1743.

In an embodiment, the support body 1741 may be provided between the sliding plate 1711 and the shock-absorbing pad 1712. The pair of first body protrusions 1742 may protrude from a base body. The pair of first body protrusions 1742 may each pass through holes formed through the sliding plate 1711. Based on the first direction, the frame holder may be disposed between the pair of first body protrusions 1742. The movement of the frame holder in the first direction may be limited by the pair of first body protrusions 1742, and the frame holder may not deviate in the first direction between the pair of first body protrusions 1742. From this structure, the pair of first body protrusions 1742 may set the distance that the frame holder may slide in the first direction and the range that the frame holder may roll-rotate.

In an embodiment, the pair of second body protrusions 1743 may protrude from the support body 1741. The pair of second body protrusions 1743 may each pass through holes formed through the sliding plate 1711. The pair of second body protrusions 1743 may be provided at a position that is spaced apart from the pair of first body protrusions 1742 in a second direction. Based on the first direction, the frame holder may be disposed between the pair of second body protrusions 1743. The movement of the frame holder in the first direction may be limited by the pair of second body protrusions 1743, and the frame holder may not deviate in the first direction between the pair of second body protrusions 1743. "Based on" as used herein covers based at least on.

In an embodiment, the pair of second body protrusions 1743 may be disposed on an opposite side of the pair of first body protrusions 1742 based on a support band (e.g., the support band 1731 of FIG. 5). Based on the second direction, the pair of first body protrusions 1742 and the pair of second body protrusions 1743 may support both end portions of the support band. The range that the support band may move in the second direction may be limited by the pair of first body protrusions 1742 and the pair of second body protrusions 1743. For example, the upward movement of the support band may be limited by the pair of first body protrusions 1742, and the downward movement of the support band may be limited by the pair of second body protrusions 1743. The support band may maintain a state extending in the first direction without departing in the second direction between the pair of first body protrusions 1742 and the pair of second body protrusions 1743.

In an embodiment, the stopper 174 may be provided to be replaceable. When a motion assistance apparatus is used for a long time, the pair of first body protrusions 1742 and the pair of second body protrusions 1743 may be damaged and worn due to repeated contact with the frame holder. The shock-absorbing pad 1712 is separated from the sliding plate 1711, and then only the stopper 174 may be replaced. Maintenance and repair of the motion assistance apparatus may be easy.

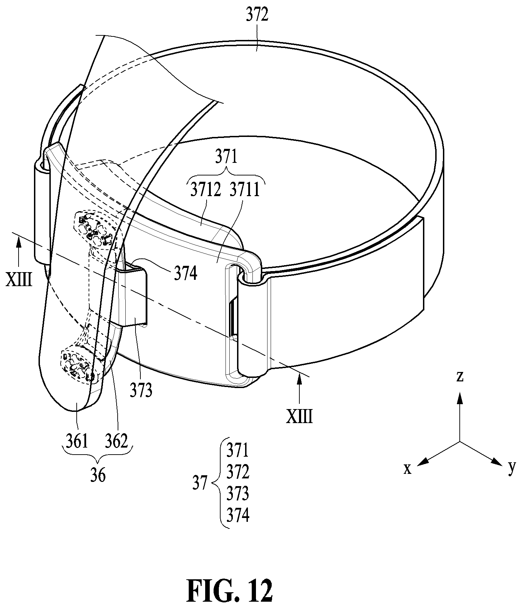

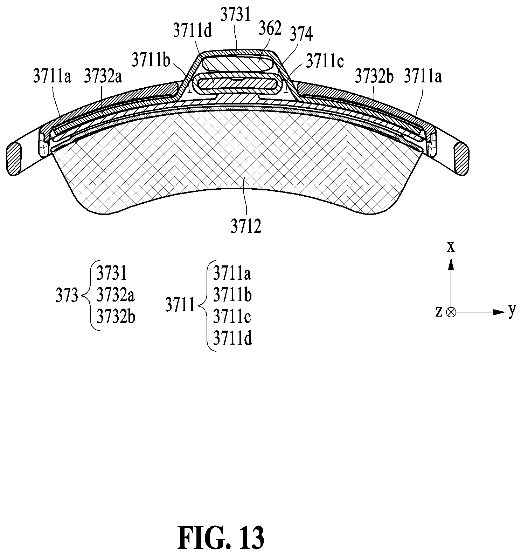

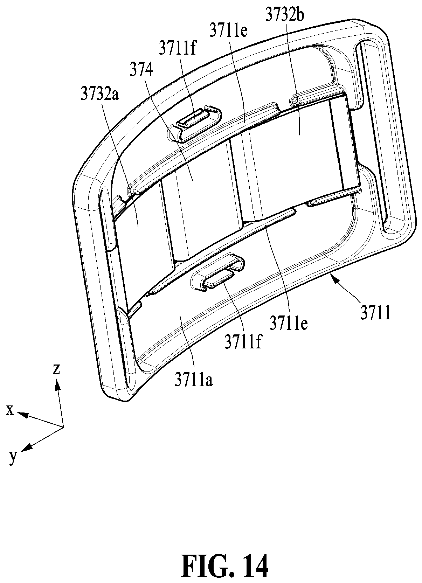

FIG. 12 is a perspective view illustrating a leg frame and a thigh fastener, according to an embodiment, FIG. 13 is a cross-sectional view illustrating the leg frame and the thigh fastener, according to an embodiment, and FIG. 14 is a perspective view illustrating a sliding plate, a connection strap, and a friction reduction strap, according to an embodiment.

Referring to FIGS. 12 to 14, a connection strap 373 according to an embodiment may support a frame holder 362 moving in various directions. Flexible movement of a leg frame 36 with respect to a thigh fastener 37 may be possible.

In an embodiment, the connection strap 373 may be connected to a fastening frame 371 and may pass through the frame holder 362. The connection strap 373 may not extend from a wearing strap 372. One end portion and the other end portion of the connection strap 373 may be connected to the inside of the fastening frame 371. The wearing strap 372 may be connected to the side surface of the fastening frame 371. From this structure, the exterior of the thigh fastener 37 may be improved, and the influence of the connection strap 373 from the wearing strap 372 may be reduced. In an embodiment, the connection strap 373 may include a center part 3731 and fixing parts 3732a and 3732b.

In an embodiment, the center part 3731 may pass between a frame body 361 and the frame holder 362. The center part 3731 may closely contact the frame holder 362 with respect to the fastening frame 371.

In an embodiment, the fixing parts 3732a and 3732b may extend from the center part 3731 and may be fixed to the inside of the fastening frame 371. The fixing parts 3732a and 3732b may be provided as a pair, for example. The pair of fixing parts 3732a and 3732b may extend from one end portion and the other end portion of the center part 3731, respectively. The pair of fixing parts 3732a and 3732b may be referred to as a first fixing part 3732a and a second fixing part 3732b, respectively. The fastening frame 371 may include a sliding plate 3711 and a shock-absorbing pad 3712.

In an embodiment, the sliding plate 3711 may face the frame body 361. In an embodiment, the sliding plate 3711 may include a plate body 3711a, a pair of guide holes 3711b and 3711c, a strap guide 3711d, a support rib 3711e, and a caught protrusion 3711f.

In an embodiment, the plate body 3711a may support the wearing strap 372. For example, holes may be formed through both side surfaces of the plate body 3711a, and the wearing strap 372 may pass through the holes and be connected to the plate body 3711a.

In an embodiment, the fixing parts 3732a and 3732b may be connected to the rear surface of the plate body 3711a. For example, the fixing parts 3732a and 3732b and the plate body 3711a may be bonded through hot melt bonding. In another example, the fixing parts 3732a and 3732b and the plate body 3711a may be detachably provided with respect to each other through a Velcro structure. For example, a loop surface may be formed on the plate body 3711a, and a hook surface may be formed on the fixing parts 3732a and 3732b. Furthermore, the first fixing part 3732a may be connected to the plate body 3711a through hot melt bonding, and the second fixing part 3732b may be connected to the plate body 3711a through a Velcro structure.

In an embodiment, the pair of guide holes 3711b and 3711c may be formed through the plate body 3711a. The pair of guide holes 3711b and 3711c may extend in a second direction. The connection strap 373 may pass through the pair of guide holes 3711b and 3711c. The pair of guide holes 3711b and 3711c may be referred to as a first guide hole 3711b and a second guide hole 3711c, respectively. The first guide hole 3711b may be adjacent to the first fixing part 3732a, and the second guide hole 3711c may be adjacent to the second fixing part 3732b.

In an embodiment, when the leg frame 36 is fastened to the thigh fastener 37, in a state in which the first fixing part 3732a is attached to the rear surface of the plate body 3711a, a user may extend the connection strap 373 from the rear surface to the front surface of the plate body 3711a through the first guide hole 3711b. Subsequently, the user may pass the connection strap 373 between the frame body 361 and the frame holder 362 and then may extend the connection strap 373 from the front surface to the rear surface of the plate body 3711a through the second guide hole 3711c. Finally, the second fixing part 3732b may be attached to the rear surface of the plate body 3711a.

In an embodiment, the strap guide 3711d may be provided between the pair of guide holes 3711b and 3711c. The strap guide 3711d may face the frame holder 362 based on a third direction (e.g., a direction that is parallel to the x-axis) intersecting the first and second directions. To reduce friction generated between the frame holder 362 and the strap guide 3711d, a friction reduction strap 374 may be disposed in the strap guide 3711d.

In an embodiment, at least a portion of the friction reduction strap 374 may be positioned between the frame holder 362 and the strap guide 3711d. For example, the friction reduction strap 374 may have a ring shape that passes through the first guide hole 3711b and the second guide hole 3711c and covers both the front and rear surfaces of the strap guide 3711d. From this structure, the frame holder 362 may not directly contact the strap guide 3711d, and the rubbing and wear of the frame holder 362 may be reduced. Furthermore, it should be noted that the friction reduction strap 374 may cover only the front surface of the strap guide 3711d without passing through the first guide hole 3711b and the second guide hole 3711c.

In an embodiment, the support rib 3711e may protrude from the rear surface of the plate body 3711a. The support rib 3711e may be provided in a pair, for example, and the pair of support ribs 3711e may be formed opposite to each other with respect to the strap guide 3711d. The support rib 3711e may extend in the first direction. The pair of support ribs 3711e may support the fixing parts 3732a and 3732b of the connection strap 373 and the friction reduction strap 374 in the second direction.

In an embodiment, the caught protrusion 3711f may protrude from the rear surface of the plate body 3711a. For example, the caught protrusion 3711f may be provided in a pair, and the pair of caught protrusions 3711f may be formed opposite to each other based on the strap guide 3711d. A hook formed in the shock-absorbing pad 3712 may be fastened to the pair of caught protrusions 3711f.

In an embodiment, the shock-absorbing pad 3712 may be attached to the inner side surface of the sliding plate 3711. The shock-absorbing pad 3712 may be in close contact with the thigh of the user. In an embodiment, the shock-absorbing pad 3712 may press the fixing parts 3732a and 3732b toward the plate body 3711a. The fixing parts 3732a and 3732b may be pressed between the plate body 3711a and the shock-absorbing pad 3712, and the connection strength of the connection strap 373 with respect to the fastening frame 371 may increase.

Each embodiment herein may be used in combination with any other embodiment(s) described herein.

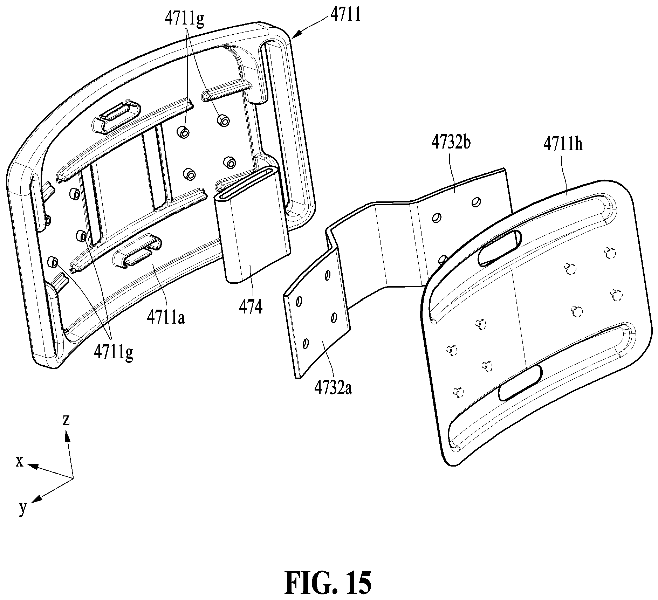

FIG. 15 is an exploded perspective view illustrating a sliding plate, a connection strap, a friction reduction strap, and a plate cover, according to an embodiment.

Referring to FIG. 15, a sliding plate 4711 according to an embodiment may further include a strap support protrusion 4711g and a plate cover 4711h.

In an embodiment, the strap support protrusion 4711g may protrude from a plate body 4711a and penetrate a first fixing part 4732a and a second fixing part 4732b. The strap support protrusion 4711g may extend, for example, in a third direction. Since the first fixing part 4732a and the second fixing part 4732b are supported by the strap support protrusion 4711g, the movement of the first fixing part 4732a and the second fixing part 4732b in first and second directions with respect to the plate body 4711a may be limited.

In an embodiment, the strap support protrusion 4711g may be provided in plurality, for example. For example, the strap support protrusion 4711g may be provided as eight strap support protrusions, and the first fixing part 4732a and the second fixing part 4732b may be supported by four strap support protrusions 4711g, respectively.

In an embodiment, the strap support protrusion 4711g may have a screw boss structure having a groove formed therein. The plate cover 4711h may be connected to the strap support protrusion 4711g.

In an embodiment, a protrusion that may be inserted into the strap support protrusion 4711g may be formed to protrude, among surfaces of the plate cover 4711h, on a surface of the plate cover 4711h that faces the plate body 4711a. The plate cover 4711h may be disposed inside of a shock-absorbing pad (e.g., the shock-absorbing pad 3712 of FIG. 12) and cover the first and second fixing parts 4732a and 4732b and a friction reduction strap 474. In an embodiment, the plate cover 4711h may press the first and second fixing parts 4732a and 4732b in the third direction. The first and second fixing parts 4732a and 4732b may be pressed between the plate body 4711a and the plate cover 4711h, and the movement of the first and second fixing parts 4732a and 4732b in the third direction may be limited. Furthermore, it should be noted that the screw boss structure may be formed on the plate cover 4711h instead of the plate body 4711a.

In an embodiment, to increase the connection strength between the plate body 4711a and the first and second fixing parts 4732a and 4732b, the first and second fixing parts 4732a and 4732b and the plate body 4711a may be connected to each other through hot melt bonding or a Velcro structure.

A motion assistance apparatus according to an embodiment may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on the thigh of the user, a wearing strap connected to the fastening frame and capable of being in close contact with the thigh of the user, and a connection strap extending from the wearing strap and passing between the frame body and the frame holder.

In an embodiment, the leg frame may be provided to be slidable and tiltable with respect to the thigh fastener.

In an embodiment, the frame holder may be provided to be slidable in a first direction that is parallel to the longitudinal direction of the connection strap and in a second direction intersecting the first direction.

In an embodiment, both end portions of the frame holder may each be fixed to the frame body.

In an embodiment, a distance that the frame holder is capable of sliding in the second direction may be less than a distance between both end portions of the frame holder.

In an embodiment, the thigh fastener may further include a stopper configured to set a distance that the frame holder is capable of sliding in the first direction.

In an embodiment, the fastening frame may include a sliding plate facing the frame body and a shock-absorbing pad attached, directly or indirectly, to the inner side surface of the sliding plate.

In an embodiment, the stopper may include a support body provided between the sliding plate and the shock-absorbing pad and a pair of first body protrusions protruding from the support body and disposed along the first direction.

In an embodiment, the stopper may further include a pair of second body protrusions protruding from the support body and provided at a position that is spaced apart from the pair of first body protrusions in the second direction.

In an embodiment, the frame holder may be capable of sliding and tilting between the pair of first body protrusions and between the pair of second body protrusions.

In an embodiment, the connection strap may include a support band connected to one end portion of the wearing strap and configured to support the frame holder and a fixing band extending from the support band and detachably connected to the fastening frame.

In an embodiment, the pair of first body protrusions and the pair of second body protrusions may support both end portions of the support band based on the second direction.

In an embodiment, the fastening frame may further include a frame-detachable surface disposed on, directly or indirectly, one surface of the sliding plate, in which one surface of the fixing band may be detachably connected to the frame-detachable surface.

In an embodiment, another surface of the fixing band may be detachably connected to another end portion of the wearing strap.

In an embodiment, the frame holder may be made of a more rigid material than the support band.

A motion assistance apparatus according to an embodiment may include a base body configured to support the back of a user, a connection frame connected to the base body, a driving module connected to the connection frame and configured to generate power to assist motion of the user, a waist frame connected to the driving module, a leg frame including a frame body configured to receive the power from the driving module and rotate and a frame holder extending from the frame body, and a thigh fastener including a fastening frame disposed on, directly or indirectly, the thigh of the user, a wearing strap connected to the fastening frame and capable of being in close contact with the thigh of the user, and a connection strap extending from the wearing strap and passing between the frame body and the frame holder, in which the leg frame may be provided to be slidable and tiltable with respect to the thigh fastener.

In an embodiment, the frame holder may be slidable in a first direction that is parallel to the longitudinal direction of the connection strap and in a second direction intersecting the first direction.

In an embodiment, the thigh fastener may further include a stopper configured to set a distance that the frame holder is capable of sliding in the first direction.

In an embodiment, both end portions of the frame holder may each be fixed to the frame body.

In an embodiment, a distance that the frame holder is capable of sliding in the second direction may be less than a distance between both end portions of the frame holder.

A motion assistance apparatus according to an embodiment may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on the thigh of the user, a wearing strap connected to the fastening frame and capable of being in close contact with the thigh of the user, a connection strap extending from the wearing strap and passing between the frame body and the frame holder, and a stopper configured to set a distance that the frame holder is capable of sliding in the first direction, in which the leg frame may be provided to be slidable and tiltable with respect to the thigh fastener.

A motion assistance apparatus according to an embodiment may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on the thigh of the user, a wearing strap connected to the fastening frame and capable of being in close contact with the thigh of the user, and a connection strap connected to the fastening frame and passing through the frame holder.

In an embodiment, the connection strap may include a center part passing between the frame body and the frame holder and a fixing part extending from the center part and fixed to the inside of the fastening frame.

In an embodiment, the fastening frame may include a sliding plate facing the frame body and a shock-absorbing pad attached, directly or indirectly, to the inner side surface of the sliding plate.

In an embodiment, the sliding plate may include a plate body configured to support the wearing strap, a pair of guide holes formed through the plate body, a strap guide provided between the pair of guide holes, a strap support protrusion protruding from the plate body and penetrating the fixing part, and a plate cover connected to the strap support protrusion and configured to cover the fixing part.

A motion assistance apparatus according to an embodiment may include a base body configured to support the back of a user, a connection frame connected to the base body, a driving module connected to the connection frame and configured to generate power to assist motion of the user, a waist frame connected to the driving module, a waist belt connected to the waist frame, a leg frame including a frame body configured to receive the power from the driving module and rotate and a frame holder extending from the frame body, and a thigh fastener including a fastening frame disposed on, directly or indirectly, the thigh of the user, a wearing strap connected to the fastening frame and capable of being in close contact with the thigh of the user, a connection strap connected to the fastening frame and passing through the frame holder, and a friction reducing strap of which at least a portion is positioned between the frame holder and the fastening frame.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via at least a third element(s).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC). Thus, each "module" herein may comprise circuitry.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums. Embodiments as set forth herein may be implemented as software including one or more instructions that are stored in a storage medium (e.g., memory) that is readable by a machine. For example, a processor of the machine may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A motion assistance apparatus comprising:
a base body, comprising a support, configured to support a back of a user;
a connection frame connected to the base body;
a driving module, comprising a motor, connected to the connection frame and configured to generate power to assist motion of the user;
a waist frame connected to the driving module;
a waist belt connected to the waist frame;
a leg frame comprising a frame body configured to receive the power from the driving module and rotate, and a frame holder extending from the frame body; and
a thigh fastener comprising a fastening frame configured to be disposed on a thigh of the user, a wearing strap connected to the fastening frame and capable of being in close contact with the thigh of the user, and a connection strap extending from the wearing strap and configured for passing between the frame body and the frame holder.

2. The motion assistance apparatus of claim 1, wherein the leg frame is configured to be slidable and tiltable with respect to the thigh fastener.

3. The motion assistance apparatus of claim 2, wherein the frame holder is configured to be slidable in a first direction that is substantially parallel to a longitudinal direction of the connection strap and in a second direction intersecting the first direction.

4. The motion assistance apparatus of claim 3, wherein the frame holder comprises two end portions, and wherein both end portions of the frame holder are each fixed to the frame body.

5. The motion assistance apparatus of claim 4, wherein a distance that the frame holder is capable of sliding in the second direction is less than a distance between the both end portions of the frame holder.

6. The motion assistance apparatus of claim 3, wherein the thigh fastener further comprises a stopper configured to set a distance that the frame holder is capable of sliding in the first direction.

7. The motion assistance apparatus of claim 6, wherein the fastening frame comprises:
a sliding plate facing the frame body; and
a shock-absorbing pad attached to an inner side surface of the sliding plate.

8. The motion assistance apparatus of claim 7, wherein the stopper comprises:
a support body provided between at least the sliding plate and the shock-absorbing pad; and
a pair of first body protrusions protruding from the support body and disposed along the first direction.

9. The motion assistance apparatus of claim 8, wherein the stopper further comprises a pair of second body protrusions protruding from the support body and provided at a position(s) that is spaced apart from the pair of first body protrusions in the second direction.

10. The motion assistance apparatus of claim 9, wherein the frame holder is configured for sliding and tilting between the pair of first body protrusions and between the pair of second body protrusions.

11. The motion assistance apparatus of claim 9, wherein the connection strap comprises:
a support band connected to an end portion of the wearing strap and configured to support the frame holder; and
a fixing band extending from the support band and detachably connected to the fastening frame.

12. The motion assistance apparatus of claim 11, wherein the pair of first body protrusions and the pair of second body protrusions are configured to support multiple end portions of the support band based on the second direction.

13. The motion assistance apparatus of claim 11, wherein the fastening frame further comprises a frame-detachable surface disposed on a surface of the sliding plate,
wherein a surface of the fixing band is detachably connected to the frame-detachable surface.

14. The motion assistance apparatus of claim 13, wherein another surface of the fixing band is detachably connected to another end portion of the wearing strap.

15. The motion assistance apparatus of claim 11, wherein the frame holder is made of a more rigid material than is the support band.
